# EUROPÄISCHE PATENTSCHRIFT

(11) **EP 1 105 719 B1**
(45) Veröffentlichungstag und Bekanntmachung des Hinweises auf die Patenterteilung: **22.10.2003**
(21) Anmeldenummer: 99952343.4
(22) Anmeldetag: 10.08.1999
(51) Int. Cl.: G01N 27/406

(54) **SCHALTUNGSANORDNUNG ZUM REGELN EINES PUMPSTROMS EINER ABGASSONDE IN EINEM KRAFTFAHRZEUG**
CIRCUIT FOR CONTROLLING A PUMP CURRENT OF AN EXHAUST PROBE IN A MOTOR VEHICLE
CIRCUIT POUR REGULER UN COURANT DE POMPAGE D'UNE SONDE POUR GAZ D'ECHAPPEMENT DANS UN VEHICULE AUTOMOBILE

(30) Priorität: 10.08.1998 DE 19836128
(43) Veröffentlichungstag der Anmeldung: 13.06.2001
(73) Patentinhaber: SIEMENS AKTIENGESELLSCHAFT, 80333 München (DE)
(72) Erfinder: AMTMANN, Markus, D-93057 Regensburg (DE); BOLZ, Stephan, D-93102 Pfatter (DE); RÖSSLER, Jürgen, D-97702 Münnerstadt (DE)
(86) Internationale Anmeldenummer: DE9902488
(87) Internationale Veröffentlichungsnummer: WO00010001

(56) Entgegenhaltungen:
- EP-A- 0 507 149
- US-A- 5 675 069
- N. KATO ET AL.: "PERFORMANCE OF THICK FILM NOX-SENSORS ON DIESEL AND GASOLINE ENGINES." SAE1997 TRANSACTIONS,1997, XP000866024 in der Anmeldung erwähnt

## Beschreibung

Die Erfindung betrifft eine Schaltungsanordnung zum Regeln eines Pumpstroms einer Abgassonde in einem Kraftfahrzeug.

Im Zuge eines steigenden Umweltbewußtseins und daraus resultierender, immer strengerer Abgasverordnungen erlangt die Schadstoffverringerung in Abgasen von Brennkraftmaschinen in Kraftfahrzeugen eine immer größere Bedeutung. Für die Einhaltung der heute gültigen Emissionsgrenzwerte für Schadstoffe, wie Kohlenmonoxid (CO), Stickoxide (NOₓ) und Kohlenwasserstoffe (HC) ist einerseits eine gezielte Motorsteuerung und andererseits eine katalytische Nachbehandlung der Abgase notwendig. Für beide Maßnahmen werden Meßwerte von Abgassonden - z.B. Lambdasonden oder NOₓ-Sonden - benötigt. Mit dem Begriff Sonde sei im folgenden stets eine Einheit aus Sensor, Sensorleitung und Sensorstecker bezeichnet.

Zur Messung der Schadstoffkonzentration im Abgas einer Brennkraftmaschine ist es bekannt, Dickschicht-Sensoren zu verwenden. Ein solcher Sensor ist am Beispiel eines NOₓ-Sensors in der Druckschrift N. Kato et al., "Performance of Thick Film NOₓ-Sensor on Diesel and Gasoline Engines", Society of Automotive Engineers, Veröffentlichung 970858, 1997, beschrieben. Dieser NOₓ-Sensor weist zwei Meßzellen und drei Sauerstoffpumpzellen auf und verwirklicht folgendes Meßkonzept: In einer ersten Meßzelle, der das zu messende Gas über eine Diffusionsbarriere zugeführt wird, wird mittels eines ersten Sauerstoff-Ionen-Pumpstroms eine erste Sauerstoffkonzentration eingestellt, wobei keine Zersetzung von NOₓ stattfindet. In einer zweiten Meßzelle, die über eine Diffusionsbarriere mit der ersten Meßzelle verbunden ist, wird der Sauerstoffgehalt mittels eines zweiten Sauerstoff-Ionen-Pumpstroms weiter abgesenkt und NOₓ an einer Meßelektrode zersetzt. Der so erzeugte Sauerstoff wird als Maß für die NOₓ-Konzentration erfaßt. Der gesamte NOₓ-Sensor wird dabei mittels eines elektrischen Heizelements auf eine erhöhte Temperatur, z. B. 700°C, gebracht.

Zum Betrieb eines derartigen Sensors ist es notwendig, den jeweiligen Pumpstrom für die Sauerstoffpumpzellen exakt zu regeln.

Aus der Druckschrift EP 0 507 149 A1 ist eine Schaltungsanordnung zur Regelung einer Abgassonde bekannt, bei der einer Meßzelle oder einer Referenzzelle Sauerstoff durch eine Sauerstoffpumpe zugeführt wird. Die Pumpe wird dabei durch eine Spannung kontrolliert und der Pumpstrom mit Hilfe eines Verstärkers gemessen.

Der Erfindung liegt das technische Problem zugrunde, eine Schaltungsanordnung zu entwickeln, durch die die Pumpströme für die Sauerstoffpumpzellen exakt geregelt werden können.

Die Aufgabe wird durch die Merkmale des Patentanspruchs 1 gelöst. Vorteilhafte Weiterbildungen der Erfindung sind in den Unteransprüchen niedergelegt.

Für die Regelung der benötigten Pumpströme wird ein Mikrocontroller in Verbindung mit einer analogen Beschaltung verwendet. Zur Ermittlung des jeweiligen Pumpstroms wird mit Hilfe von A/D-Wandlern im Mikrocontroller der Spannungsabfall an einem vorzugsweise unmittelbar vor die entsprechende Pumpzelle geschalteten Meßwiderstand gemessen. Somit wird der Meßfehler der gesamten Schaltungsanordnung auf die Toleranz der Meßwiderstände und die durch Leckströme und Quantisierungsfehler verursachten Fehler der A/D-Wandlungen reduziert. Ein Ausführungsbeispiel der Erfindung wird im folgenden für einen NOₓ-Sensor anhand der Figuren erläutert. Es zeigen:
- Figur 1: eine schematische Schnittdarstellung eines NOₓ-Sensors,
- Figur 2: ein Blockschaltbild der erfindungsgemäßen Schaltungsanordnung zum Regeln eines Pumpstroms und
- Figur 3: eine schematische Darstellung einer NOₓ-Sonde

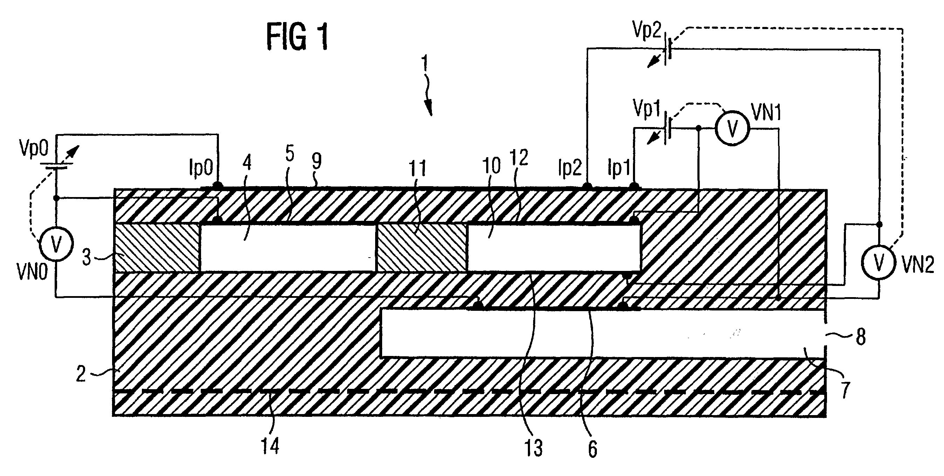

In Figur 1 ist ein Schnitt durch einen NOₓ-Sensor 1 schematisch dargestellt. Der aus einem Festkörperelektrolyten 2, in diesem Fall Zirkondioxid, bestehende NOₓ-Sensor 1 nimmt über eine erste Diffusionsbarriere 3 das zu messende Abgas auf. Das Abgas diffundiert durch die Diffusionsbarriere 3 in eine erste Meßzelle 4. Der Sauerstoffgehalt in dieser Meßzelle wird mittels einer ersten Nernstspannung VN0 zwischen einer ersten Pumpelektrode 5 und einer Umgebungsluft ausgesetzten Referenzelektrode 6 gemessen. Dabei ist die Referenzelektrode 6 in einem Luftkanal 7 angeordnet, in den über eine Öffnung 8 Umgebungsluft gelangt. Beide Elektroden 5, 6 sind herkömmliche Platinelektroden.

Im herkömmlichen Verfahren wird der Meßwert der ersten Nernstspannung VN0 dazu verwendet, eine erste Stellspannung Vp0 einzustellen. Die Stellspannung Vp0 treibt einen ersten Sauerstoff-Ionen-Pumpstrom Ip0 durch den Festkörperelektrolyten 2 des NOₓ-Sensors 1 zwischen der ersten Pumpelektrode 5 und einer Außenelektrode 9 - die Pumpelektrode 5 und die Außenelektrode 9 bilden eine erste Pumpzelle. Dabei wird die Stellspannung Vp0 von einem Regler so eingestellt, daß in der ersten Meßzelle 4 eine vorbestimmte Sauerstoffkonzentration vorliegt.

Die erste Meßzelle 4 ist mit einer zweiten Meßzelle 10 über eine zweite Diffusionsbarriere 11 verbunden. Durch diese Diffusionsbarriere 11 diffundiert das in der Meßzelle 4 vorhandene Gas in die zweite Meßzelle 10. Die zweite Sauerstoffkonzentration in der zweiten Meßzelle 10 wird über eine zweite Nernstspannung VN1 zwischen einer zweiten Pumpelektrode 12, die ebenfalls eine Platinelektrode ist, und der Referenzelektrode 6 gemessen und von einem Regler zur Vorgabe einer zweiten Stellspannung Vp1 verwendet, die einen zweiten Sauerstoff-Ionen-Pumpstrom Ip1 treibt. Der zweite Sauerstoff-Ionen-Pumpstrom Ip1 aus der zweiten Meßzelle 10 fließt von der zweiten Pumpelektrode 12 durch den Festkörperelektrolyten 2 zur Außenelektrode 9 (zweite Pumpzelle). Mit seiner Hilfe wird in der zweiten Meßzelle 10 eine vorbestimmte Sauerstoffkonzentration eingestellt.

Die von den bisherigen Vorgängen in den Meßzellen 4 und 10 nicht betroffene NOₓ-Konzentration wird nun an einer Meßelektrode 13, die katalytisch wirksam ausgestaltet ist, bestimmt. Dazu wird eine dritte Sauerstoffkonzentration über eine dritte Nernstspannung VN2 zwischen der Meßelektrode 13 und der Referenzelektrode 6 gemessen und von einem Regler zur Vorgabe einer dritten Stellspannung Vp2 verwendet. Unter Anlegen dieser Stellspannung Vp2 zwischen der Meßelektrode 13 und der Außenelektrode 9 (dritte Pumpzelle) wird das NOₓ zersetzt und der freigewordene Sauerstoff wird durch den Festkörperelektrolyten 2 in einem dritten Sauerstoff-Ionen-Pumpstrom Ip2 zur Außenelektrode 9 hin gepumpt. Der dritte Sauerstoff-Ionen-Pumpstrom Ip2 wird bei ausreichend geringem Restsauerstoffgehalt in der Meßzelle 10 nur von Sauerstoffionen getragen, die aus der Zersetzung von NOₓ stammen. Er ist somit ein Maß für die NOₓ-Konzentration in der Meßzelle 10 und somit im zu messenden Abgas. Da derartige NOₓ-Sensoren eine starke Temperaturabhängigkeit aufweisen, sorgt ein Heizelement 14 dafür, daß die Sensortemperatur zur Einhaltung der notwendigen Meßgenaugkeit stets in einem vorgegebenen Temperaturbereich gehalten wird.

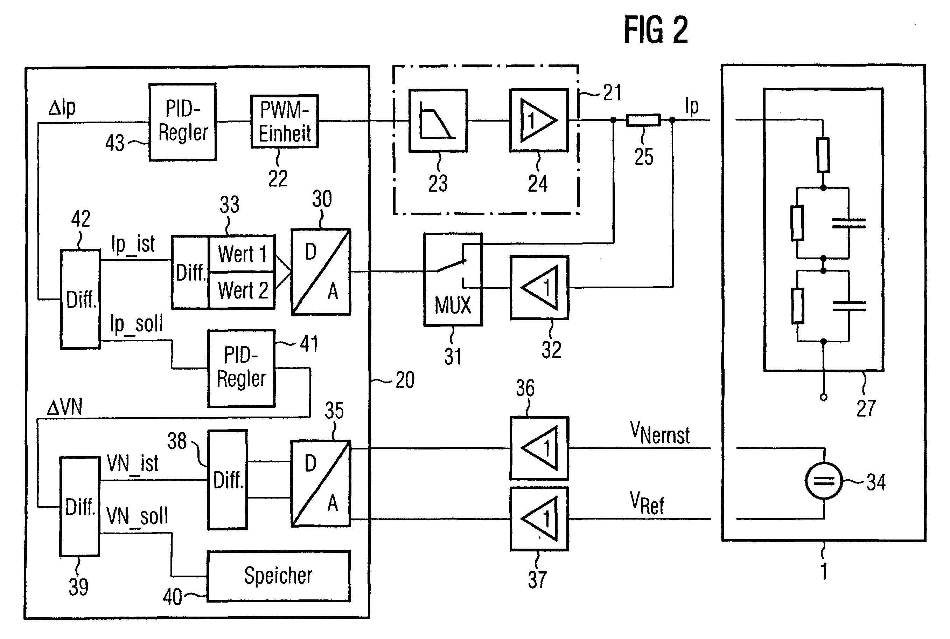

Zum Regeln der Pumpströme wird ein Mikrocontroller 20 in Verbindung mit einer analogen Beschaltung 21 verwendet. Die Schaltungsanordnung eines einzelnen Pumpstromregelkreises ist in Figur 2 detailliert dargestellt. Die Regelschaltung des gesamten NOₓ-Sensors weist für jede zu steuernde Pumpzelle eine derartige Schaltungsanordnung auf. Dabei können die erforderlichen digitalen Schaltungsanteile innerhalb eines einzigen Mikrocontrollers 20 realisiert werden. Eine PWM-Einheit 22 im Mikrocontroller 20 erzeugt ein pulsweitenmoduliertes Signal, das mit Hilfe einer analogen Filterschaltung 23 in eine Gleichspannung umgewandelt wird. Diese Spannung wird je nach Anforderung an die benötigte Stromstärke entweder direkt oder über einen Impedanzwandler 24 auf einen Meßwiderstand 25 gegeben, der in Serie zur zu steuernden Pumpzelle 27 des NOₓ-Sensors 1 liegt. Die Pumpzelle, die ist in Figur 2 in Form einer Ersatzschaltung der zugehörigen Impedanz dargestellt.

Mit Hilfe eines ersten A/D-Wandlers 30 im Mikrocontroller 20 werden über einen Multiplexer 31 abwechselnd die Spannungspotentiale vor (Wert 1) und nach (Wert 2) dem Meßwiderstand 25 eingelesen. Da der Eingang des NOₓ-Sensors 1 meist sehr hochohmig ist, kann ein Impedanzwandler 32, z.B. ein Bufferverstärker, in die Meßleitung, die zur Messung des Potentialwerts nach dem Meßwiderstand 25 dient, geschaltet werden. Ein erster diskreter Differenzbildner 33 ermittelt aus jeweils einem Potentialwert vor und nach dem Meßwiderstand 25 den Pumpstrom-Istwert Ip_ist.

Die zum Regeln der Pumpströme benötigten Nernstspannungen werden ebenfalls im Mikrocontroller 20 berechnet. Dazu wird sowohl das Nernstpotential V_{Nernst} als auch das Referenzpotential V_{Ref} der entsprechenden Meßzelle 34 des NOₓ-Sensors 1 von einem zweiten A/D-Wandler 35 im Mikrocontroller 20 eingelesen. Die Meßzelle 34 entspricht dabei abhängig von der zu steuernden Pumpzelle 27 entweder der ersten Meßzelle 4 oder der zweiten Meßzelle 10 aus Figur 1 und ist schematisch als Gleichspannungsquelle dargestellt. Auch hier können Impedanzwandler 36 und 37, z.B. in Form von Bufferverstärkern, eingesetzt werden, umd die hohe Ausgangsimpedanz des NOₓ-Sensors 1 an die Impedanz der Eingänge des Mikrocontrollers 20 anzupassen. Ein zweiter Differenzbildner 38 im Mikrocontroller 20 ermittelt aus den eingelesenen Potentialwerten den Istwert der Nernstspannung VN_ist. In einem dritten Differenzbildner 39 wird dann der Istwert der Nernstspannung VN_ist mit einem Sollwert VN_soll verglichen. Dieser Sollwert wird aus einem Festwertspeicher 40 ausgelesen, der vorzugsweise in den Mikrocontroller 20 integriert ist. Wird dabei ein programmierbarer Festwertspeicher, beispielsweise ein EPROM verwendet, so ist ein Ausgleich eventuell auftretender Asymmetrien oder eine Nachkalibrierung während der Lebensdauer des Sensors möglich.

Aus der Spannungsdifferenz ΔVN zwischen dem Istwert VN_ist und dem Sollwert VN_soll der Nernstspannung wird über einen ersten Regler 41, z.B. einen PID-Regler innerhalb des Mikrocontrollers 20 ein Pumpstrom-Sollwert Ip_soll gebildet. Ein vierter Differenzbildner 42 bildet aus dem Ist- und dem Sollwert des Pumpstroms eine Pumpstromdifferenz ΔIp, die einem zweiten Regler 43, z.B. einem PID-Regler, innerhalb des Mikrocontrollers 20 zugeführt wird, der die PWM-Einheit 22 steuert.

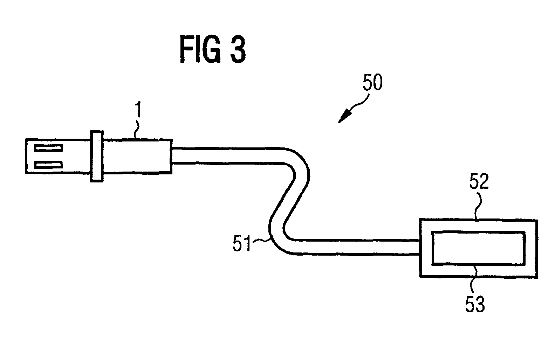

Wie in Figur 3 dargestellt weist eine NOₓ-Sonde 50 neben dem NOₓ-Sensor 1 auch eine Sensorleitung 51 und einen Sensorstekker 52 auf. Da die Signalströme des NOₓ-Sensors 1 meist nur im nA-Bereich liegen, beeinflußt die Länge der Verbindungsleitungen zwischen dem Sensor 1 und der Regelelktronik 53 die Genauigkeit der Signalübertragung in erheblichem Maße. Durch Integrieren der Regelschaltung 53 in das Gehäuse des Sensorsteckers 52 wird sichergestellt, daß die Signale trotz auftretender Leckströme mit der erforderlichen Genauigkeit übertragen werden.

Durch den Einsatz eines Mikrocontrollers mit integrierten A/D-Wandlern lassen sich verschiedene Spannungspotentiale innerhalb der Schaltungsanordnung einlesen und beliebig durch Differenzbildung weiterverarbeiten. Auf diese Weise kann auf eine zusätzliche analoge Differenzbildung mit den entsprechenden Toleranzfehlern verzichtet werden. Im Vergleich mit einer rein analogen Schaltungsanordnung erlaubt es die Kombination eines Mikrocontrollers mit einer analogen Beschaltung somit, den Gesamtfehler der Schaltung auf die Toleranz des Meßwiderstandes und die Fehler der A/D-Wandlung, also Quantisierungsfehler und auftretende Leckströme, zu reduzieren. Durch den geringen Schaltungsaufwand und das robuste Schaltungsdesign wird eine hohe Zuverlässigkeit des Systems sichergestellt.

Die Erfindung wurde beispielhaft für einen NOₓ-Sensor beschrieben, es sei aber darauf hingewiesen, daß entsprechende Schaltungsanordnungen auch für andere nach dem Prinzip der galvanischen Sauerstoffkonzentrationszelle mit Festelektrolyt arbeitenden Abgassonden, z.B. lineare Sauerstoffsonden, geeignet sind.

## Patentansprüche

1. Schaltungsanordnung zum Regeln eines Pumpstroms einer nach dem Prinzip der galvanischen Sauerstoffkonzentrationszelle mit Festelektrolyt arbeitenden Abgassonde, die aufweist
- einen Mikrocontroller (20),
• durch den ein Pumpstrom-Istwert (Ip_ist) an einer zu steuernden Pumpzelle (27) bestimmt wird,
• durch den ein Istwert der Nernstspannung (VN_ist) an der entsprechenden Meßzelle (34) bestimmt wird,
• durch den ein pulsweitenmoduliertes Signal erzeugt wird,
- eine analoge Beschaltung (21), durch die das pulsweitenmodulierte Signal in einen Pumpstrom für die zu steuernde Pumpzelle (27) umgeformt wird, und
- einen Festwertspeicher (40), aus dem ein Sollwert der Nernstspannung (VN_soll) ausgelesen wird.

2. Schaltungsanordnung nach Anspruch 1, **dadurch gekennzeichnet, daß** der Festwertspeicher (40) programmierbar ist.

3. Schaltungsanordnung nach einem der Ansprüche 1 oder 2, **dadurch gekennzeichnet, daß** der Festwertspeicher (40) in den Mikrocontroller (20) integriert ist.

4. Schaltungsanordnung nach einem der vorhergehenden Ansprüche, **dadurch gekennzeichnet,**
- **daß** ein Meßwiderstand (25) vor die zu steuernde Pumpzelle (27) geschaltet wird, und
- **daß** durch den Mikrocontroller (20) aus dem Spannungsabfall an diesem Meßwiderstand (25) der Pumpstrom-Istwert (Ip_ist) bestimmt wird.

5. Schaltungsanordnung nach einem der vorhergehenden Ansprüche, **dadurch gekennzeichnet, daß** der Mikrocontroller (20) aufweist
- einen dritten Differenzbildner (39), durch den aus dem Istwert der Nernstspannung (VN_ist) und dem Sollwert der Nernstspannung (VN_soll) eine Spannungsdifferenz (ΔVN) gebildet wird,
- einen ersten Regler (41), durch den aus der Spannungsdifferenz (ΔVN) ein Pumpstrom-Sollwert (Ip_soll) gebildet wird,
- einen vierten Differenzbildner (41), durch den aus dem Pumpstrom-Istwert (Ip_ist) und dem Pumpstrom-Sollwert (Ip_soll) eine Pumpstromdifferenz (ΔIp) gebildet wird,
- eine PWM-Einheit (22), durch die ein pulsweitenmoduliertes Signal erzeugt wird, und
- einen zweiten Regler (43), durch den die PWM-Einheit (22) aufgrund der Pumpstromdifferenz (ΔIp) gesteuert wird.

6. Schaltungsanordnung nach Anspruch 5, **dadurch gekennzeichnet, daß** der Microcontroller (20) aufweist
- einen ersten A/D-Wandler (30), durch den die Sannungspotentiale vor und nach dem Meßwiderstand (25) eingelesen werden, und
- einen ersten Differenzbildner (33), durch den aus den eingelesenen Spannungspotentialen der Pumpstrom-Istwert (Ip_ist) ermittelt wird.

7. Schaltungsanordnung nach Anspruch 5 oder 6, **dadurch gekennzeichnet, daß** der Microcontroller aufweist
- einen zweiten A/D-Wandler (35), durch den das Nernstpotential (V_{Nernst}) und das Referenzpotential (V_{Ref}) an der entsprechenden Meßzelle (34) eingelesen wird, und
- einen zweiten Differenzbildner (38), durch den aus dem Nernstpotential (V_{Nernst}) und dem Referenzpotential (V_{Ref}) der Istwert der Nernstspannung (VN_ist) ermittelt wird.

8. Schaltungsanordnung nach einem der vorhergehenden Ansprüche, **dadurch gekennzeichnet, daß** die analoge Beschaltung (21) aufweist
- eine Filterschaltung (23), durch die das pulsweitenmodulierte Signal in ein Gleichspannungssignal umgewandelt wird, und
- einen Impedanzwandler (24), durch den die Ausgangsimpedanz des Mikrocontrollers (20) abhängig von der benötigten Stromstärke angepaßt wird.

9. Schaltungsanordnung nach einem der vorhergehenden Ansprüche, **dadurch gekennzeichnet, daß** die Schaltungsanordnung in das Gehäuse des Sensorsteckers (52) der Abgassonde integriert ist.

## Claims

1. Circuit arrangement for controlling a pump flow of an exhaust emission probe operating with a solid electrolyte according to the principle of the galvanic oxygen concentration cell which has
- a microcontroller (20),
- by means of which a pump flow actual value (Ip_ist) is ascertained in a pump cell (27) to be controlled,
- by means of which an actual value of the Nernst voltage (VN_ist) is determined in the corresponding measuring cell (34),
- by means of which a pulse-width modulated signal is generated,
- an analogue protective circuit (21), by means of which the pulse-width modulated signal is converted into a pump flow for the pump cell (27) to be controlled, and
- read-only storage (40) from which a desired value of the Nernst voltage (VN_soll) is read out.

2. Circuit arrangement according to Claim 1, **characterised in that** the read-only storage (40) is programmable.

3. Circuit arrangement according to one of Claims 1 or 2, **characterised in that** the read-only storage (40) is integrated into the microcontroller (20).

4. Circuit arrangement according to one of the preceding claims, **characterised in that**,
- a precision resistor (25) is connected before the pump cell (27) to be controlled, and
- the pump flow actual value (Ip_ist) is determined by the microcontroller (20) from the voltage drop at this precision resistor (25).

5. Circuit arrangement according to one of the preceding claims, **characterised in that** the microcontroller (20) has
- a third subtractor (39), by means of which a voltage differential (ΔVN) is formed from the actual value of the Nernst voltage (VN_ist) and the desired value of the Nernst voltage (VN_soll),
- a first controller (41), by means of which a pump flow desired value (Ip_soll) is formed from the voltage differential (ΔVN),
- a fourth subtractor (41), by means of which a pump flow differential (ΔIp) is formed from the pump flow actual value (Ip_ist) and the pump flow desired value (Ip_soll),
- a PWM unit (22), by means of which a pulse-width modulated signal is generated, and
- a second controller (43) by means of which the PWM unit (22) is controlled on the basis of the pump flow differential (ΔIp).

6. Circuit arrangement according to Claim 5, **characterised in that** the microcontroller (20) has
- a first A/D transformer (30), by means of which the voltage potentials before and after the precision resistor (25) are input, and
- a first subtractor (33), by means of which the pump flow actual value (Ip_ist) is ascertained from the input voltage potentials.

7. Circuit arrangement according to Claims 5 or 6, **characterised in that** the microcontroller has
- a second A/D transformer (35), by means of which the Nernst potential (V_{Nernst}) and the reference potential (V_{Ref}) are input at the corresponding measuring cell (34), and
- a second subtractor (38), by means of which the actual value of the Nernst voltage (VN_ist) is ascertained from the Nernst potential (V_{Nernst}) and the reference potential (V_{Ref}).

8. Circuit arrangement according to one of the preceding claims, **characterised in that** the analogue protective circuit (21) has
- a filter circuit (23) by means of which the pulse-width modulated signal is converted into a direct voltage signal, and
- an impedance transformer (24) by means of which the output impedance of the microcontroller (20) is adjusted according to the current intensity required.

9. Circuit arrangement according to one of the preceding claims, **characterised in that** the circuit arrangement is integrated into the housing of the sensor connector (52) of the exhaust probe.

## Revendications

1. Configuration de circuit pour réguler un courant de pompage d'une sonde à gaz d'échappement fonctionnant avec électrolyte solide selon le principe du capteur galvanique de concentration d'oxygène, comprenant
- un microcontrôleur (20),
• par lequel on détermine une valeur réelle du courant de pompage (lp_ist) d'une cellule de pompage (27) à commander,
• par lequel on détermine une valeur réelle de la tension de Nernst (VN_ist) du capteur (34) correspondant,
• par lequel on produit un signal à impulsions modulées en largeur,
- un circuit analogique (21) par lequel le signal à impulsions modulées en largeur est transformé en un courant de pompage pour la cellule de pompage (27) à commander, et
- une mémoire de constantes (40) pour en extraire une valeur de consigne de la tension de Nemst (VN_soll).

2. Configuration de circuit selon la revendication 1, **caractérisé en ce que** la mémoire de constantes (40) est programmable.

3. Configuration de circuit selon l'une des revendications 1 ou 2, **caractérisé en ce que** la mémoire de constantes (40) est intégrée dans le microcontrôleur (20).

4. Configuration de circuit selon l'une des revendications précédentes, **caractérisé en ce que**,
- une résistance de mesure (25) est connectée avant la cellule de pompage (27) à commander, et
- la valeur réelle du courant de pompage (lp_ist) est déterminée par l'intermédiaire du microcontrôleur (20) par la chute de tension aux bornes de cette résistance de mesure (25).

5. Configuration de circuit selon l'une des revendications précédentes, **caractérisé en ce que** le microcontrôleur (20) comprend
- un troisième soustracteur (39) établissant une différence de potentiel (ΔVN) à partir de la valeur réelle de la tension de Nernst (VN_ist) et de la valeur de consigne de la tension de Nemst (VN_soll).
- un premier régulateur (41), déterminant une valeur de consigne du courant de pompage (Ip_soll), à partir de la différence de potentiel (ΔVN),
- un quatrième soustracteur (42) établissant une différence de courant de pompage (ΔIp) à partir de la valeur réelle (Ip_ist) du courant de pompage et de la valeur de consigne du courant de pompage (Ip_soll),
- une unité PWD (22) générant un signal à impulsions modulées en largeur, et
- un deuxième régulateur (43) commandant l'unité PWM (22), à partir de la différence de courant de pompage (ΔIp).

6. Configuration de circuit selon la revendication 5, **caractérisé en ce que** le microcontrôleur (20) comprend
- un premier convertisseur A/D (30) enregistrant les potentiels de tension avant et après la résistance de mesure (25),
- un premier soustracteur (33) déterminant la valeur réelle (Ip_ist) du courant de pompage à partir des potentiels de tension mémorisés.

7. Configuration de circuit selon la revendication 5 ou 6, **caractérisé en ce que** le microcontrôleur comprend
- un deuxième convertisseur A/D (35) enregistrant la tension de Nernst (V_{Nemst}) et la tension de référence (V_{Ref}) du capteur correspondant (34), et
- un deuxième soustracteur (38) déterminant la valeur réelle de la tension de Nernst (VN_ist) à partir de la tension de Nernst (V_{Nemst}) et de la tension de référence (V_{Ref}).

8. Configuration de circuit selon l'une des revendications précédentes, **caractérisé en ce que** le circuit analogique (21) comprend
- un circuit de filtrage (23) transformant le signal à impulsions modulées en largeur en un signal de tension continue, et
- un transformateur d'adaptation d'impédance (24) adaptant l'impédance de sortie du microcontrôleur (20) en fonction de l'intensité du courant désirée.

9. Configuration de circuit selon l'une des revendications précédentes, **caractérisé en ce que** la configuration de circuit est intégrée dans le boîtier du connecteur (52) de la sonde à gaz d'échappement.
